Europäisches Patentamt

European Patent Office

Office européen des brevets

(11) Publication number: **0 180 460**
**B1**

(12) **EUROPEAN PATENT SPECIFICATION**

(45) Date of publication of patent specification: **19.09.90**

(21) Application number: **85307832.7**

(22) Date of filing: **29.10.85**

(51) Int. Cl.⁵: **H 04 N 7/16**

(54) Decoders for pay television systems.

(30) Priority: **31.10.84 JP 229348/84**
**21.05.85 JP 110001/85**

(43) Date of publication of application:
**07.05.86 Bulletin 86/19**

(45) Publication of the grant of the patent:
**19.09.90 Bulletin 90/38**

(84) Designated Contracting States:
**DE FR GB NL**

(56) References cited:
**EP-A-0 052 822**
**WO-A-83/04154**
**US-A-4 460 922**

(73) Proprietor: **SONY CORPORATION**
**7-35 Kitashinagawa 6-Chome Shinagawa-ku**
**Tokyo 141 (JP)**

(72) Inventor: **Hayashi, Toshihide c/o Patents**
**Division**
**Sony Corporation 6-7-35 Kitashinagawa**
**Shinagawa-ku Tokyo 141 (JP)**
Inventor: **Kanno, Masayoshi c/o Patents**
**Division**
**Sony Corporation 6-7-35 Kitashinagawa**
**Shinagawa-ku Tokyo 141 (JP)**

(74) Representative: **Thomas, Christopher Hugo**
**et al**
**D Young & Co 10 Staple Inn**
**London WC1V 7RD (GB)**

## Description

This invention relates to decoders for pay television systems.

Broadcasting systems include cable television (CATV) systems and direct-broadcasting satellite (DBS) systems. These are frequently used for pay television systems, using an appropriate converter.

In a pay television system of this type, a conventional decoder for decoding a programme of a desired channel has two main status modes; a free mode and a pay mode. The free mode allows free reception of a television programme, and the pay mode represents a status mode in which a subscriber is charged for reception of a television programme.

More particularly, the pay mode is further classified into a flat fee mode, a tier level pay mode and pay-per-view mode. In the tier level pay mode, a tier level representing the rank of programmes to be received by the decoder is predetermined. A user subscribes to a desired tier level and pays fees to a broadcast station or centre, corresponding to the subscribed tier level. In the pay-per-view mode, the user reserves desired programmes, and pays the programme fee only for the reserved programmes to a broadcast centre.

In the pay-per-view mode, user procedures are cumbersome. When the user wishes to watch a pay programme in the pay-per-view mode according to a first known procedure, the broadcast centre posts a programme schedule to each user. The user telephones the broadcast centre by a predetermined date before a desired programme is to be broadcast (say a week or a day beforehand) so as to reserve the desired programme. At this time, the user pays the fee for the programme. When the desired programme is on the air, the broadcast centre sends a reservation confirmation signal, hereinafter referred to as an identification (ID) signal to a user who has reserved the corresponding programme. When a user's receiver or a decoder in the receiver receives the ID signal, a scrambled programme signal is descrambled by the decoder, so that the user can watch the programmme.

In the pay-per-view system described above;

(A) the user must telephone the broadcast centre to reserve the desired programme, which is time-consuming and may be inconvenient,

(B) each programme has a reservation due date, so that the user cannot reserve the desired programme when the reservation due date has passed,

(C) fees cannot be refunded even if the user does not watch the reserved programme, and

(D) an idle time is required to send the ID signal to all reserved users at the beginning of every reserved programme.

According to a second, improved procedure, a pay-per-view status signal is sent from the broadcast centre to each user. When the user wishes to watch a programme represented by the pay-per-view station signal, he depresses a pay-per-view switch located on his tuner. The scrambled programme is then descrambled, and the user can watch the programme. When the user actually watches the programme, charge data transmitted with the subscribed programme is stored in an account memory of the decoder. The centre periodically checks the contents of the account memory of each decoder, using a telephone line, and collects fees or bills the applicable charge.

This effectively solves the drawbacks of the first procedure. However, since the broadcast centre must periodically check the account memories of all users, the checking system is complicated. Moreover, since fee collection is performed by use of a telephone line, an auto-dial unit and a modem (modulator/demodulator) are required, so that the required user unit and centre unit are complex and expensive.

International patent specification WO—A1—8304154 discloses a pay television with a decoder control circuit corresponding to the precharacterizing part of claim 1.

According to the present invention there is provided a decoder control circuit for a pay television system, the decoder control circuit comprising:

means for descrambling a selected video programme transmitted from a centre at a remote location;

means for receiving and decoding control data transmitted from said centre, said control data including at least programme fee data and programme status data;

an advance money memory for storing money data transmitted from said centre; and

control means for subtracting a programme fee from the money data stored in said advance money memory upon reception of said selected programme; characterized by:

said control means including a manual switch for selectively allowing descrambling of said programme when said programme is a pay-per-view programme, as represented by pay-per-view status data in said control data; and

said control means includes timer means arranged to measure the time during which said programme is received, and for controlling said substraction based on the measure of reception time.

The invention will now be described by way of example with reference to the accompanying drawings, throughout which like parts are referred to by like references, and in which:

Figure 1 is a schematic diagram of a pay-per-view system applied to a DBS utilizing a broadcast satellite;

Figure 2 is an illustration of a data format of a pulse code modulation data signal used in the DBS;

Figure 3 is a block diagram of a tuner unit shown in Figure 1;

Figure 4 is a flow chart illustrating the operational mode of the tuner shown in Figure 1;

Figure 5 is a flow chart illustrating the pay-per-view mode of the tuner shown in Figure 1; and

Figure 6 is a flow chart illustrating a control programme continuously executed by the central processing unit (CPU) of the tuner.

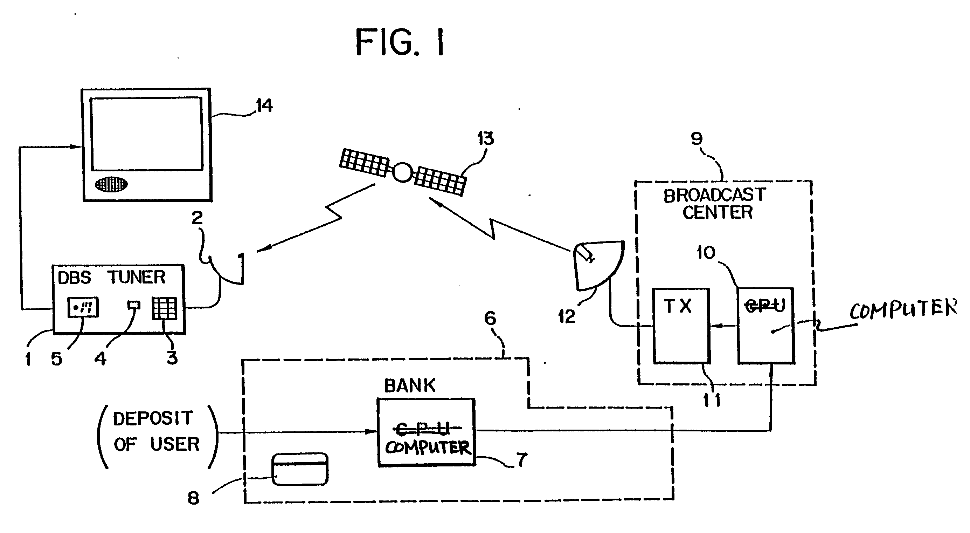

In the system of Figure 1, a broadcast wave from a broadcast satellite 13 is directly received by a receiving parabolic antenna 2 and supplied to a DBS tuner 1. Audio and video signals reproduced by the DBS tuner 1 are supplied to a television monitor 14. An unscrambled broadcast signal is reproduced by a decoder in the tuner 1 in the free mode. However, in the pay mode or the pay-per-view mode, a scrambled broadcast signal is descrambled and reproduced on the television screen.

When the pay-per-view mode is utilized by the user, the user deposits funds using a cash card 8 or the like, to advance money from an account within a bank 6 to a broadcast centre 9. The cash card 8 is conveniently used with an automatic teller machine (ATM) (not shown). The deposit data is transmitted from a computer 7 of the bank 6 to a computer 10 of the broadcast centre 9. The desired programme is transmitted from the broadcast centre 9 to the user through a satellite broadcast link. The deposit data is inserted in the data coded in a PCM data signal transmitted during a vertical blanking period of the video signal. The deposit data is transmitted from a transmitter 11 to the antenna 2 of each user through a broadcast parabolic antenna 12 by way of the satellite 13.

The tuner 1 of each user has an advance money memory, and the deposit data is stored therein. The content of the storage can be displayed at any time on a display 5.

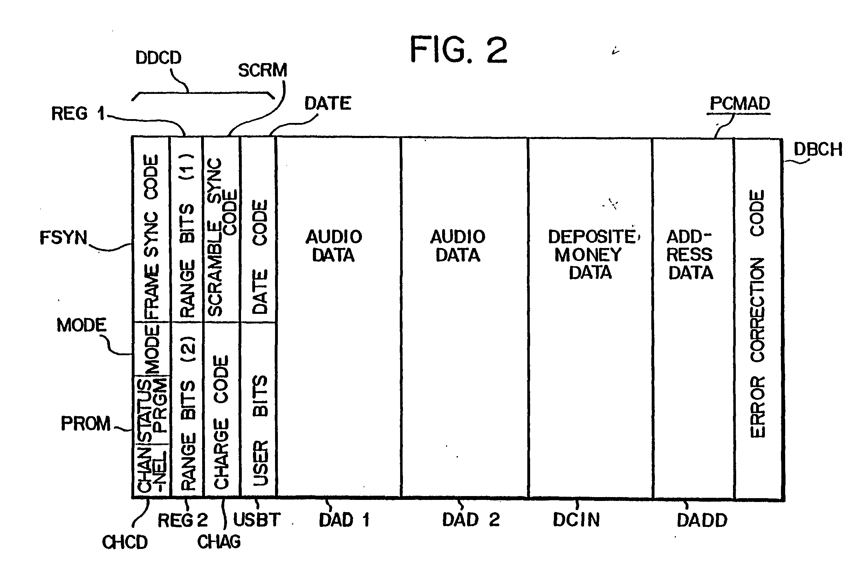

The broadcast centre 9 transmits a television signal having a PCM data signal PCMAD with the format shown in Figure 2, during a vertical blanking period of the video signal. The PCM audio signal PCMAD incorporates a plurality of data slots for data of different types. Two slots correspond to two (alternately used) channels of audio data DAD1 and DAD2. Also included are a slot for the deposit money data DCIN (representing the amount of the deposited fees) and a slot for address data DADD, including the user identification (ID) code. A data code field DDCD is added to the above data string, and an error check code field DBCH is also added to the end of the data string.

The data code slot DDCD contains a frame sync coce FSYN as the initial data thereof. The following data consist of the mode data word MODE, a programme status code word PROM, a channel code CHCD representing a broacast channel number, first and second range bits REG1 and REG2 used to expand the compressed audio data, a scramble sync code SCRM used for descrambling the signal, a charge code CHAG representing the programme fees, a data code DATE and user bits USBT.

The programme status code PROM comprises a 4-bit code signal representing the pay mode assigned to the current broadcast programme. For example, in one embodiment the programme status code PROM is set to be "0000" in the free mode and "0001" in the pay mode.

The pay-per-view mode is further classified into a time pay-per-view mode represented by a code "0101" and a programme pay-per-view mode represented by a code "0110".

The free and pay mode are, respectively, a mode for allowing free reception of programmes and a mode for subscription programmes on a monthly basis in the same manner as in the known system. The time pay-per-view sub-mode is set to charge for the length of listening time, and the programme pay-per-view sub-mode is set to charge predetermined fees for the programme regardless of reception time.

The broadcast centre 9 transmits with each programme the programme status code PROM added to the data code DDCD. A proper pay mode is predetermined in accordance with the contents of the programme by the broadcast centre 9, so that the appropriate programme status code PROM is added to the data code DDCD, and the resulting broadcast signal is transmitted to the user. Thus, fees can be charged in accordance with charging levels suitable for the respective programmes.

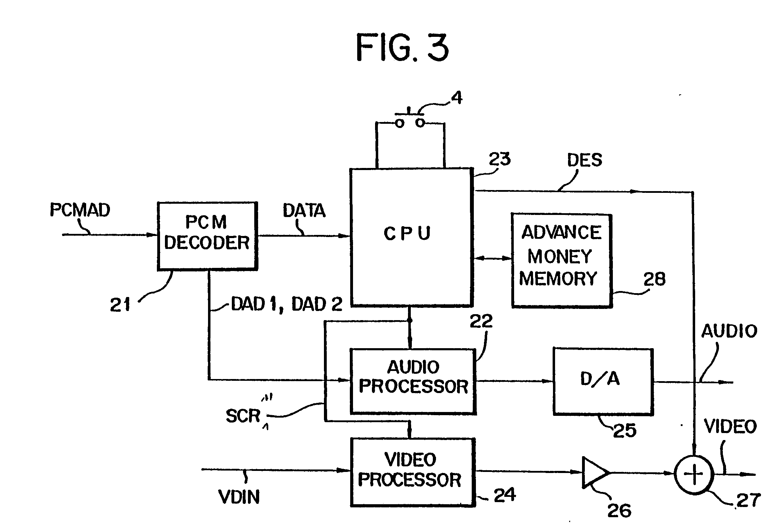

In the tuner 1 which receives the broadcast signal, the PCM data signal PCMAD is supplied to a PCM decoder 21 (Figure 3), located within the tuner 1 (Figure 1). The PCM decoder 21 decodes the PCM audio signal PCMAD to extract the first and second channel audio data DAD1 and DAD2 (Figure 2) which are supplied to an audio processor 22. The other data DATA are supplied to a central processing unit (CPU) 23 which is preferably a microcomputer. A video signal VDIN (which may be scrambled) in the broadcast signal is supplied to the input of a video processor 24, which is arranged to unscramble the video signal if necessary.

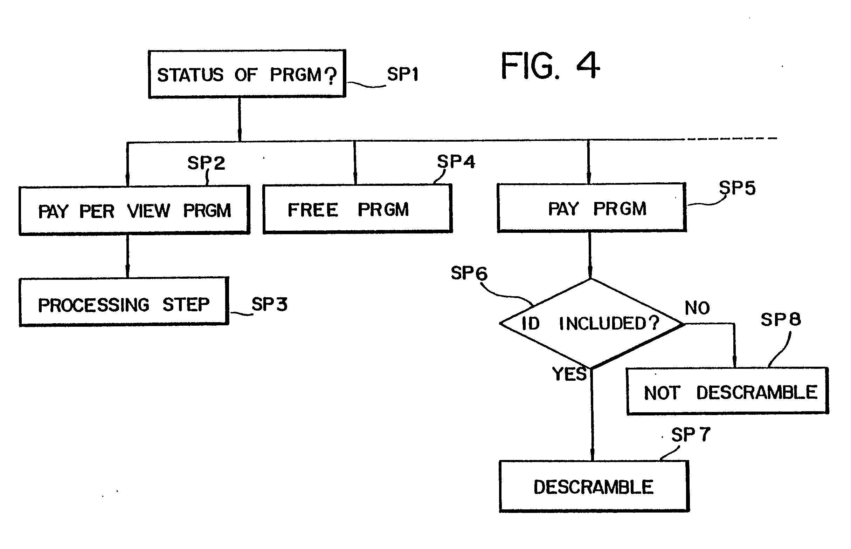

As shown in Figure 4, a step SP1 inspects the code word PROM and controls the subsequent operation accordingly. When the programme status code PROM represents the time pay-per-view mode or the programme pay-per-view mode (step SP1) a pay-per-view programme SP2 runs under the control of the CPU 23 to perform a processing step SP3.

However, when the programme status code PROM respesents the free mode, a free mode programme SP4 is executed. In this case, the CPU 23 causes the audio processor 22 to decode the audio data DAD1 and DAD2 and the video processor 24 to decode the video input signal VDIN.

When the programme status code PROM represents the pay mode, a pay programme SP5 is executed under control of the CPU 23. The CPU 23 determines in a step SP6 whether or not the user ID signal included in the data DATA is the same as a unique user ID assigned to the tuner 1. If YES in the step SP6 , the CPU 23 supplies the scramble sync code SCRM to the audio and video processors 22 and 24, so as to cause them to perform descrambling of the audio data DAD1 and DAD2 in a step SP7. Therefore, the audio and video signals are both reproduced. However, if the result is NO in the step SP6, the CPU 23 does not supply the scramble sync code SCRM to the audio and video processors 22 and 24, so as not to cause them to perform descrambling of the audio and data DAD1 and DAD2.

The audio signal reproduced by the audio processor 22 is supplied to a digital-to-analog (D/A) converter 25. The D/A converter 25 generates an audio output signal AUDIO. The video signal reproduced by the video processor 24 is supplied to a buffer amplifier 26. A video output signal VIDEO is generated as the sum output of an adder 27.

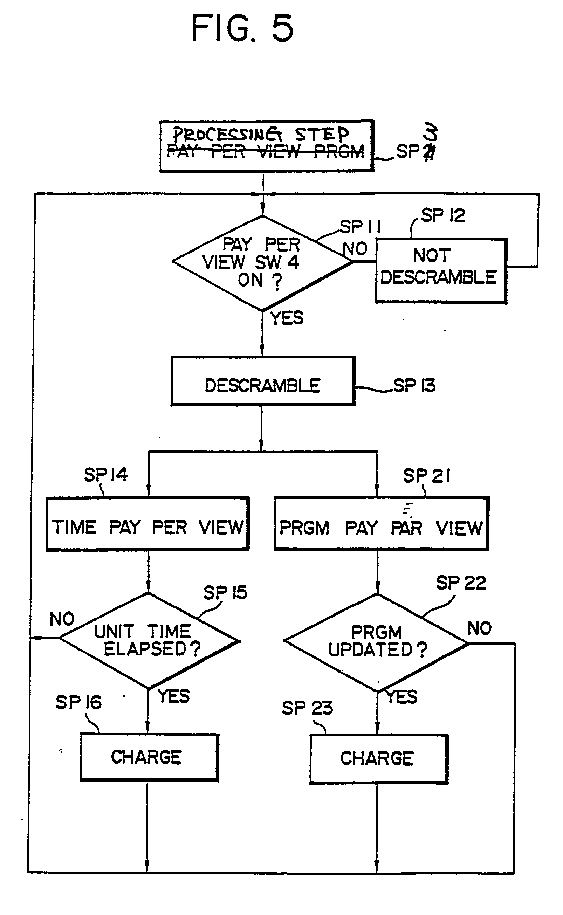

In the pay-per-view mode, the CPU 23 performs the processing step SP3, as shown in Figure 5. When the processing step SP3 is started, the CPU 23 checks in a step SP11 whether or not a pay-per-view switch 4 is turned on.

As shown in Figure 1, the pay-per-view switch 4 is mounted on the operation panel of the tuner 1. After the user has entered a desired channel with a ten-key pad 3, he depresses the pay-per-view switch 4, if the programme is a pay-per-view programme, which sets the tuner 1 in the pay-per-view mode. The reception channel number is displayed on the display 5. The above sequential operations are performed under the control of the CPU 23.

If the result of the step SP11 is NO (Fugure 5), the CPU 23 determines that the user has to set the tuner 1 in the pay-per-view mode. Control then advances to a step SP12, and no descrambling is performed. Thereafter, the flow returns repeatedly to the step SP11. The CPU 23 thus waits until the user turns on the pay-per-view switch 4.

When the pay-per-view switch 4 is turned on by the user, the result of the step SP11 is YES. The CPU 23 then supplies the scramble sync code SCRM to the audio and video processors 22 and 24 for descrambling. The CPU 23 thus controls the generation of both the audio and video output signals AUDIO and VIDEO.

When the content of the programme status code PROM represents the time pay-per-view mode, the CPU 23 fetches this data in a step SP14, and the flow advances to a step SP15.

The CPU 23 checks in the step SP15 the length of viewing time in the time pay-per-view mode. More specifically, the CPU 23 checks whether or not a unit time has been counted by a timer incorporated in the CPU 23. If the result is NO in the step SP15, the control flow returns to the step SP11. The CPU 23 waits until counting of the unit time by the timer is completed by a loop of the steps SP11, SP13, SP14, SP15 and SP11.

When the unit time has elapsed, the result of the step SP15 is YES. The control flow then advances to a charge step SP16, in which one unit time fee is subtracted from the contents of an advance money memory 28 (Figure 3). This may be a fixed quantity, or a quantity designated by the CHAG field of the PCM data. The control flow returns to the step SP11 again to reset the timer.

The CPU 23 waits for the predetermined unit time to elapse by the loop of steps SP11, SP13, SP14, SP15 and SP11.

In the same manner as described above, the CPU 23 sends out the audio and video output signals AUDIO and VIDEO which are descrambled and reproduced by the audio and video processors 22 and 24 while the time pay-per-view mode programme is being received by the user. A fee corresponding to the viewing time of the programme is substracted from the contents of the advance money memory 28 in the step SP16.

When the user wishes to stop receiving the programme in the time pay-per-view mode, he merely turns off the pay-per-view switch 4. In this case, the step SP11 is determined by the CPU 23 to be NO, and the CPU 23 then causes the audio and video processors 22 and 24 to disable descrambling by the loops of steps SP11, SP12, SP11 ... , etc.

When the user wishes to watch programmes in the programme pay-per-view mode, the user simply turns on the time pay-per-view switch 4 of the tuner 1 in the same manner as in the time pay-per-view mode. In this case, after the step SP11 has been determined by the CPU 23 to be YES, the CPU 23 controls the audio and video processors 22 and 24 to perform descrambling in the step SP13.

In this case, the program status code PROM included in the data DATA represents the programme pay-per-view mode detected by the CPU 23 in a step SP21. The control flow advances to a decision step SP22. The CPU 23 determines in the step SP22 whether the current programme being received is the same as the programme being received when the step SP22 last had control or whether the programme being received has been changed. If the result is NO in the step SP22, the CPU 23 determines that the same programme is being received. Then the control flow returns to the step SP11. The user can continuously watch the programme in the programme pay-per-view mode by a loop of the steps SP11, SP13, SP21, SP22 and SP11.

When the user wishes to change the programme being received, the step SP22 is determined by the CPU 23 to be YES. Then a charge is subtracted from the contents of the advance money memory 28 at the step SP23, and the flow returns to the step SP11.

Once the programme has changed, the mode is set to continue the changed programme. The CPU 23 monitors this programme by the loop of the steps SP11, SP13, SP21, SP22 and SP11.

Every time one programme has been completed or finished, the CPU 23 performs charge processing, so that the user is charged per programme, irrespective of the elapsed time.

When the user operates the pay-per-view switch 4, the mode of the tuner 1 is set to be either the time pay-per-view mode or the programme pay-per-view mode. The CPU 23 supplies to an input of the adder 27 (Figure 3) a display signal DES representing that the current programme is set in the time or programme pay-per-view mode. For example, numerical value "1" representing the time pay-per-view mode or numerical value "2" representing the programme pay-per-view mode is displayed on the screen of the monitor 14. The user can easily see the charging mode being used for the current programme.

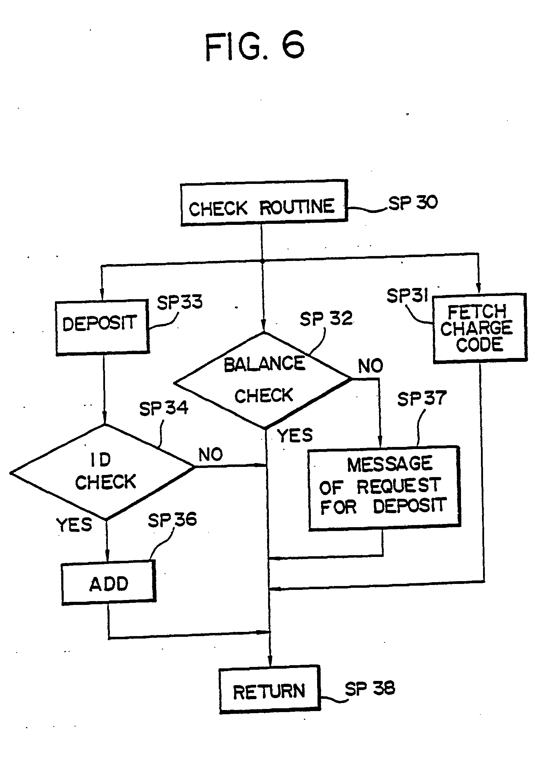

Figure 6 illustrates a flow chart of operations continuously checked by the CPU 23. Normally, control stays in one of the loops illustrated in Figure 5. These loops are represented in Figure 6 by a fetch charge code step SP31, which passes control through a return step SP38. The return step SP38 returns control to a step SP30 which normally passes control to the fetch charge code step SP31, to define the loop of Figure 5 which is active (for the appropriate sub-mode). Periodically, the check routine step SP30 sends control to two other paths illustrated in Figure 5. Preferably this is accomplished by a signal from a timer of the CPU 23 which interrupts the normal control loop, to check the balance data maintained in the advance money memory 28 at periodic intervals, or to update the data stored in the advance money memory 28 in response to detection of data within the DCIN slot of PCMAD (Figure 2). In the loops represented by the step SP31, the charge code data CHAG superimposed on the programme by PCMAD is detected by the CPU 23, and, as previously described, when the programme or channel is changed, the step SP31 is executed.

A step SP32 receives control periodically by a timer interrupt. Alternatively, execution of the charge step SP16 or SP23 (Figure 5) may include the setting of a flag which causes the step SP30 to pass control to the step SP32. In the step SP32, the CPU 23 compares the balance of the advance money memory 28 with the charge code CHAG fetched by the step SP31. When the CPU 23 determines that the balance of the advance money memory 28 is smaller than the data represented by the charge code CHAG, the CPU 23 causes the monitor 14 to display a message representing a request for deposit in a step SP37. In this case, the CPU 23 inhibits the SCRM signal, so that the programme cannot be watched. The deposit data is checked in a step SP33. The step SP30 passes control to the step SP33 periodically, by a timer interrupt, so that the control data PCMAD may be checked for deposit information. Alternatively, the step SP30 may check each incoming control word PCMAD for depoist data and branch to the deposit routine step SP33 whenever data is detected within the DCIN field. When deposit money data DCIN is detected as present in the step SP33 (Figure 6), the CPU 23 checks the ID code included in the address data DADD. In this case, if the result is YES in a step SP34, the deposit money data DCIN is added to the content of the advance money memory 28 in a step 36. When all the routines have been completed in Figure 6, the flow returns from the step SP38. Preferably, the advance money memory 38 comprises a non-volatile memory device such as an MNOS semiconductor RAM.

With the above arrangement, the pay-per-view mode for designating a pay programme is classified into time and programme pay-per-view submodes. Charging is determined in units of time or programmes. Therefore, a reasonable charging system suitable for the purposes of users can be established.

A desired programme need not be reserved by telephone, and the user can conveniently enjoy the DBS system. If the user does not watch a reserved programme, no charge is made. Moreover, when the pay-per-view switch 4 is depressed, the user can watch any programme at any time, provided the sum stored in the advance money memory 28 is enough.

Since the user is not charged through a telephone line (bidirectional communication system), the configuration of the user's receiver and the broadcast centre system can be simplified and made less expensive. The user simply receives a message via the step SP37 representing a request for a deposit when the value of the advance account memory is less than the predetermined value which is needed for viewing a particular programme. The user pays a fee in accordance with the message, or else has it automatically deducted from the advance money memory 28, so that a simple efficient system can be provided. In the pay-per-view system of this embodiment, the transmission line from each user to the centre comprises a link through a bank or the like. Such a link may be located at the user's home, or a public link may be used such as the link of a bank's ATM. Programme fee data, deposit amount data, and the like are sent from the broadcast centre 9 to the user through a transmission line using the regular broadcast channel as shown in Figure 1. Shortage of a deposit amount is automatically displayed by the user's monitor 14. Therefore, a conversational two-way communication between the user and the broadcast 9 is provided, although only a one-way line terminating at the user's home is actually used.

The broadcast centre 9 may, but need not, seen the ID signal to all users when the payment data is obtained. Many control words relative to payment data can be sent to users within a limited time, and additional information such as a text or message can be sent, if desired.

The above embodiment exemplifies a DBS system. However, the present invention can be applied to other pay broadcast systems such as a CATV system. The invention can also be applied to an audio pay broadcast system.

Alternatively, in the above embodiment, the fee corresponding to the actual viewing time detected by the timer incorporated in the CPU 23 can be substracted from the contents of the advance account memory periodically, by means of a timer interrupt procedure, which is enabled during the course of a pay mode.

**Claims**

1. A decoder control circuit for a pay television system, the decoder control circuit comprising:

means (22, 24) for descrambling a selected video programme transmitted from a centre (9) at a remote location;

means (21) for receiving and decoding control data transmitted from said centre (9), said control data including at least programme fee data and programme status data;

an advance money memory (28) for storing money data transmitted from said centre (9); and

control means (23) for substracting a programme fee from the money data stored in said advance money memory (28) upon reception of said selected programme; characterized by:

said control means (23) including a manual switch (4) for selectively allowing descrambling of said programme when said programme is a pay-per-view programme, as represented by pay-per-view status data in said control data; and

said control means (23) includes timer means arranged to measure the time during which said programme is received, and for controlling said subtraction based on the measure of reception time.

2. A decoder control circuit according to claim 1 including means for activating said timer means when said manual switch (4) is turned on, and for deactivating said scrambling when said manual switch (4) is turned off during the period of reception of a time pay-per-view programme.

**Patentansprüche**

1. Dekoder-Steuerschaltung für Gebühren-Fernsehsystem

mit einer Einrichtung (22, 24) zum Entwürfeln eines ausgewählten Videoprogramms, das von einem Zentrum (9) an einen entfernten Ort gesendet wird,

mit einer Einrichtung (21) zum Emfangen und zum Dekodieren von Steuerdaten, die von dem Zentrum (9) ausgesendet werden und zumindest Programmgebühren-Daten und Programmstatus-Daten enthalten,

mit einem fortschreitenden Gebührenspeicher (28) zur Speicherung von Gebühren-Daten, die von der Zentrale gesendet werden,

sowie mit einer Steuereinrichtung (23) zum Substrahieren einer Programm-Gebühr von den in dem fortschreitenden Gebührenspeicher (28) gespeicherten Gebühren-Daten beim Empfang des ausgewählten Programms, dadurch gekennzeichnet,

die Steuereinrichtung (23) einen manuellen Schalter (4) enthält, der selektiv ein Entwürfeln des Programms erlaubt, wenn dieses Programm ein durch Pay-per-view-Statusdaten in den genannten Steuerdaten kennzeichnetes Pay-per-view-Program ist,

und daß die Steuereinrichtung (23) eine Zeitgebereinrichtung enthält zur Messung der Zeit, in der das Programm empfangen wird, und zur Steuerung des genannten Subtraktion auf der Basis der Messung der Empfangszeit.

2. Dekoder-Steuerschaltung nach Anspruch 1, mit Mitteln zur Aktivierung der Zeitgebereinrichtung beim Einschalten des manuellen Schalters (4) und zur Deaktivierung der Entwürfelung, wenn der manuelle Schalter während der Dauer des Empfangs eines Pay-per-view-Programms ausgeschaltet wird.

**Revendications**

1. Circuit de commande de décodeur pour système de télévision à péage, le circuit de commande de décodeur comprenant:

un moyen (22, 24) pour désembrouiller un programme vidéo sélectionné émis à distance par un centre (9);

un moyen (21) pour recevoir et décoder des données de commande émise par le centre (9), les données de commande incluant au moins des données de taxe de programme et des données d'état de programme;

une mémoire d'argent d'avance (28) pour mémoriser des données d'argent émises par le centre (9); et

um moyen de commande (23) pour soustraire une taxe de programme des données d'argent mémorisées dans la mémoires d'argent d'avance (28) à la réception du programme sélectionné; caractérisé par:

le moyen de commande (23) incluant un commutateur manuel (4) pour permettre sélectivement de désembrouillage du programme quand le programme est un programme à prépaiement, tel que représenté par des données d'état de prépaiement incluses dans les données de commande; et

la moyen de commande (23) incluant un moyen à horloge agencé pour mesurer le temps pendant lequel le programme est reçu, et pour commander la soustraction selon la mesure du temps de réception.

2. Circuit de commande de décodeur selon la revendication 1, incluant un moyen pour rendre actif le moyen à horloge quand le commutateur manuel (4) est mis en circuit, et pour rendre inactif le brouillage quand le commutateur manuel (4) est mis hors circuit pendant la période de réception d'un programme à prépaiement de temps.

# FIG. 1

DBS  TUNER

BROADCAST CENTER

TX    CPU    COMPUTER

BANK

DEPOSIT OF USER

CPU COMPUTER

EP 0 180 460 B1

FIG. 2

DDCD  SCRM  DATE  PCMAD

REG 1

FSYN  MODE  PROM

CHCD  REG 2  CHAG  USBT  DAD 1  DAD 2  DCIN  DADD

DBCH

| FRAME SYNC CODE | RANGE BITS (1) | SCRAMBLE SYNC CODE | DATE CODE | AUDIO DATA | AUDIO DATA | DEPOSITE MONEY DATA | ADD-RESS DATA | ERROR CORRECTION CODE |
| CHAN-NEL STATUS\|MODE\|PRGM | RANGE BITS (2) | CHARGE CODE | USER BITS | | | | | |

EP 0 180 460 B1

# FIG. 3

FIG. 4

```
┌──────────────────────┐
│   STATUS OF PRGM?    │──── SP1
└──────────────────────┘
           │
     ┌─────┼──────────────────┬────────────── ─ ─ ─
     │                        │              │
    SP2                      SP4            SP5
┌──────────────────┐  ┌──────────────┐  ┌──────────────┐
│ PAY PER VIEW PRGM│  │  FREE  PRGM  │  │  PAY  PRGM   │──── SP5
└──────────────────┘  └──────────────┘  └──────────────┘
     │                                         │
┌──────────────────┐                    SP6   ◇
│ PROCESSING STEP  │── SP3               ╲   ╱ ╲
└──────────────────┘                      ╱ ID INCLUDED? ╲── NO ──┐   SP8
                                          ╲             ╱        ┌──────────────────┐
                                           ╲           ╱         │ NOT  DESCRAMBLE  │
                                          YES │                  └──────────────────┘
                                              │         SP7
                                          ┌──────────────┐
                                          │  DESCRAMBLE  │
                                          └──────────────┘
```

# FIG. 5

```
┌──────────────────────────┐
│   PROCESSING  STEP       │
│  PAY  PER  VIEW  PRGM    │── SP 3
└──────────────────────────┘
              │
              ▼
         PAY PER                    ┌──────────────┐
         VIEW SW 4   ──NO──SP 11──▶ │     NOT      │── SP 12
         ON ?        SP 11          │  DESCRAMBLE  │
              │                     └──────────────┘
            YES
              │
              ▼
     ┌──────────────────┐
     │   DESCRAMBLE     │── SP 13
     └──────────────────┘
              │
      ┌───────┴───────────────────┐
      ▼ SP 14                     ▼ SP 21
 ┌──────────────────┐      ┌──────────────────┐
 │ TIME PAY PER VIEW│      │ PRGM PAY PAR VIEW│
 └──────────────────┘      └──────────────────┘
         │                        │
         ▼ SP 15                  ▼ SP 22
  NO──  UNIT TIME            PRGM      ──NO
        ELAPSED ?            UPDATED ?
         │                        │
  SP 16 YES               SP 23  YES
         ▼                        ▼
   ┌──────────┐            ┌──────────┐
   │  CHARGE  │            │  CHARGE  │
   └──────────┘            └──────────┘
```

# FIG. 6

```
        ┌──────────────────┐
        │  CHECK ROUTINE   │────SP 30
        └──────────────────┘
```

DEPOSIT SP33

BALANCE CHECK SP 32

FETCH CHARGE CODE SP31

NO

YES

ID CHECK SP34

NO

MESSAGE OF REQUEST FOR DEPOSIT SP37

YES

ADD SP36

RETURN SP 38